(19) Europäisches Patentamt
European Patent Office
Office européen des brevets

(11) Publication number: 0 139 156 B1

# (12) EUROPEAN PATENT SPECIFICATION

(45) Date of publication of patent specification: 31.05.89

(51) Int. Cl.[4]: C 07 F 9/24, A 01 N 57/26

(21) Application number: 84109926.0

(22) Date of filing: 24.06.82

(60) Publication number of the earlier application in accordance with Art. 76 EPC: 0 068 823

## (54) Novel phosphoroamido (DI) thioate derivatives, pesticidal compositions containing them and the use of the novel derivatives for combating pests.

(30) Priority: 24.06.81 US 276780

(43) Date of publication of application: 02.05.85 Bulletin 85/18

(45) Publication of the grant of the patent: 31.05.89 Bulletin 89/22

(84) Designated Contracting States: BE CH DE FR GB IT LI SE

(56) References cited:
US-A-3 716 600
US-A-3 810 959
US-A-3 825 634
US-A-3 845 172
US-A-4 049 679
CHEMICAL ABSTRACTS, vol. 82, no. 17, 28th April 1975, page 144, no. 107563f, Columbus, Ohio, USA; & JP - A - 74 24658 (HOKKO CHEMICAL INDUSTRY CO., LTD.) 25-06-1974
SOVIET INVENTIONS ILLUSTRATED, Section Chemical, Derwent Publications Ltd., week C05, 12th March 1980, abstract no. 08617C/05; & SU - A - 219 322 (AS UKR ORG CHEM INS)

(73) Proprietor: ROHM AND HAAS COMPANY
Independence Mall West
Philadelphia Pennsylvania 19105 (US)

(72) Inventor: Smolanoff, Joel Robert
9 Hickory Lane
Chalfont Pennsylvania 18914 (US)
Inventor: Fitzpatrick, Joseph Michael
Rua Afonso Ferreira, 151
Sao Paulo SP. CEP 04503 (BR)
Inventor: Ollinger, Janet
23 Edinboro Circle
Chalfont Pennsylvania 18914 (US)

(74) Representative: Angell, David Whilton et al
ROHM AND HAAS (UK) LTD. European Operations Patent Department Lennig House 2 Mason's Avenue
Croydon CR9 3NB (GB)

EP 0 139 156 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention concerns novel phosphoroamido(di)thioate derivatives which are useful as pesticides, notably arthropodicides (notably insecticides and acaricides), nematicides, and fungicides. This application is divided out of Application No. 82303297.4.

U.S. Patent 4,263,288, discloses acaricidal, insecticidal, and nematicidal phosphoroamido(di)thioates.

The several Magee patents, U.S. Patent Nos. 3,716,600, 4,049,679, 4,110,443, 3,914,417, 3,845,172, 3,885,032, and 3,825,634, disclose insecticidal phosphoroamido(di)thioates and methods of killing insects therewith. Column 18, lines 1—8 of U.S. 3,716,600 discloses broadly that, in addition to foliar application of the insecticidal compounds, one or more of the compounds may be applied in other liquid or solid formulations to the insects, their environment or hosts for example, directly to plants or soil so as to effect control of insects coming into contact therewith.

Japanese Patent Specification No. 77012251 discloses phosphoroamidothioate derivatives having insecticidal activity.

U.S. Patent 3,399,213, discloses parasiticidal and fungicidal acylphosphoroamidate compounds.

U.S. Patent 3,511,635 discloses herbicidal organophosphorus-nitrogen compounds.

U.S. Patent 3,760,043, discloses phosphoroamidothiote derivatives which are stated to possess fungicidal, acaricidal, insecticidal, and nematocidal properties.

Although the prior art discloses phosphoroamido(di)thioate compounds stated to have pesticidal, including insecticidal, activity, there remains a need for pesticidal compounds having improved pesticidal efficacy, and diminished detrimental effects such as mammalian toxicity and environmental waste, especially against soil insects such as the corn rootworm.

The prior art, including the several Magee patents described above which constitute the closest art known, do not provide any specific teaching illustrative of the insecticidal activity of the compounds therein disclosed when applied in the soil to protect against soil organisms. It is well known to those skilled in the art that organophosphates having a high order of contact insecticidal efficacy when applied to foliar portions of plants offer relatively little economic value as plant protectants when applied to, or introduced into, the soil environment of the plants. Organophosphates tend to be susceptible to rapid degradative processes in the soil due to the combination of such factors as the hydrolytic action of soil moisture, unfavorable soil pH conditions, both of the above being exacerbated by the presence of soil microflora and fauna capable of rendering the insecticidal compound inactive. Application of a pesticide to the soil in ordinary agricultural practice does not necessarily or usually coincide with the presence of susceptible life stages of the target pest. For example, the hatching of insect eggs may be either delayed or it may occur over an interval of several days to several or many weeks. Insect ova are not generally affected by organophosphate pesticides. Thus, pesticidal compounds having satisfactory residual activity, especially in the soil (ie pesticidal compounds that retain their pesticidal efficacy under atmospheric conditions over an interval of several days to several or many weeks) are required in order to assure satisfactory protection of plants against soil insects. Further, it is highly desirable that such pesticidal compounds having activity persistent over an interval of several days to several or many weeks elicit control over a diverse selection of soil organisms that are agricultural pests.

The present invention provides novel phosphoroamido(di)thioate derivatives having in one or more respects unexpected biological activity having regard to previously known pesticides of related structure. The novel derivatives are particularly noteworthy as insecticides, acaricides and nematicides when applied by soil application or by foliar application techniques, especially against soil pests, notably the corn (maize) rootworm.

These and other objects as will become apparent, are achieved by the present invention which provides compounds of Formula I below:

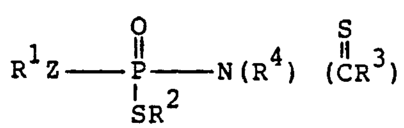

(I)

wherein:

$R^1$ is methyl, ethyl, 2,2,2-trifluoroethyl, phenyl or benzyl;

$R^2$ is unsubstituted straight or branched chain ($C_3$—$C_5$)alkyl, phenyl or benzyl;

$R^3$ is hydrogen, methyl, or trifluoromethyl; and

$R^4$ is (a) propenyl or (b) benzyl, optionally ring-substituted with from one to three of the same or different ($C_1$—$C_3$)alkyl, fluoro, chloro, bromo, methoxy, trifluoromethyl, nitro, or cyano groups or atoms;

Z is O or S.

In a most preferred embodiment for soil application, the invention provides compounds of Formula (I) wherein:

$R^1$ is methyl, ethyl, or 2,2,2-trifluoroethyl;

$R^2$ is *n*-propyl, 3-pentyl, or 1-methylpropyl;

$R^3$ is hydrogen;

$R^4$ is ring-substituted benzyl containing one or two of the same or different $(C_1—C_3)$alkyl, fluoro, chloro, bromo, methoxy, trifluoromethyl, nitro or cyano substituents; and

Z is O.

Especially preferred compounds for foliar application are those of Formula (I) wherein:

$R^1$ is methyl, ethyl, or 2,2,2-trifluoroethyl;

$R^2$ is *n*-propyl, 3-pentyl, or 1-methylpropyl;

$R^3$ is hydrogen; and

$R^4$ is unsubstituted or substituted benzyl wherein the substituent can be from one to two $(C_1—C_3)$-alkyl, fluoro, chloro, bromo, trifluoromethyl, nitro or cyano groups.

A compound illustrative of the invention is:

N-*p*-chlorobenzyl N-hydrogenthiocarbonyl O-ethyl S-(1-methylpropyl)phosphoroamidothioate

The method of controlling pests, according to the invention comprises applying directly to the pests notably insects, nematodes and/or acarids or to the *loci* to be freed or protected from attack by the pests an amount of one or more compounds of Formula (I) which is sufficient to combat the pest(s) in question.

In one preferred embodiment, the method of the invention comprises applying on or in the soil pesticidally effective amount of one or more compounds of Formula (I) wherein:

$R^1$ is methyl, ethyl, 2,2,2-trifluoroethyl, phenyl or benzyl;

$R^2$ is unsubstituted straight or branched chain $(C_3—C_5)$ alkyl, phenyl or benzyl;

$R^3$ is hydrogen;

$R^4$ is unsubstituted or substituted benzyl; and

Z is O or S.

The compounds of Formula I can be obtained by methods described in the literature for the preparation of analogous compounds or by methods specially devised for the purpose. One method for the preparation of hydrogencarbonyl and hydrogenthiocarbonyl phosphoroamido(di)thioates involves conversion of S-alkyl phosphorodichlorothioates to the products in four steps as is illustrated by the following reaction scheme:

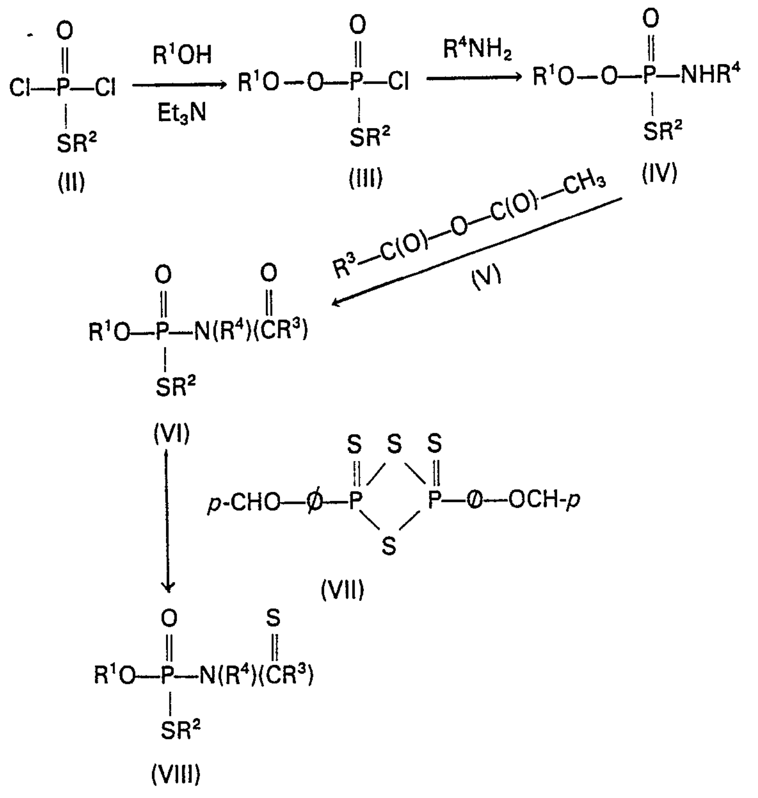

(II) (III) (IV) (VI) (VII) (VIII)

Another method for the preparation of hydrogencarbonyl and hydrogenthiocarbonyl phosphoroamido(di)thioates involves the S-alkylation of suitably substituted salts according to the following reaction:

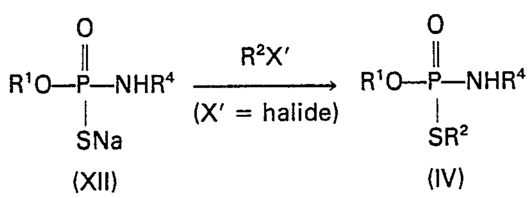

(XII) (IV)

The product of this alkylation reaction having the formula (IV) can then be further treated as illustrated in the reaction scheme set forth above to obtain the new compounds of the invention having the formula (VIII).

Still another method for the preparation of hydrogencarbonyl and hydrogenthiocarbonyl phosphoroamido(di)thioates involves the reaction of diethyl chlorophosphite with a suitably substituted sulfenyl halide to obtain an intermediate O,S-disubstituted phosphorochloridothioate, corresponding to formula (III), designated below by the formula number (III'), in the reaction scheme set forth above, as follows:

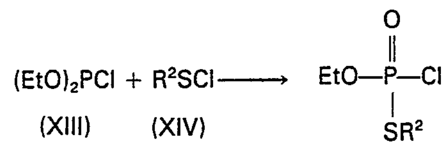

(XIII) (XIV) (III')

Intermediate (III') can be further reacted as set forth in the reaction scheme illustrated above to obtain the desired end products.

Yet another method for the preparation of hydrogencarbonyl and hydrogenthiocarbonyl phosphoroamido(di)thioates involves the N-alkylation in the presence of a suitable base of a hydrogencarbonyl phosphoroamido(di)thioate:

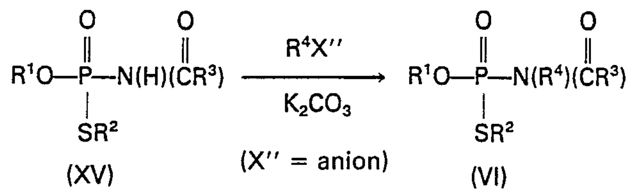


(XV) (VI)

The product of this reaction having the formula (VI) can be further reacted as set forth in the reaction scheme illustrated above to obtain the hydrogenthiocarbonyl phosphoroamido(di)thioate compound having the formula (VIII).

The S,S-dialkyl phosphoroamidodithioates of the invention can be prepared according to the following sequence:

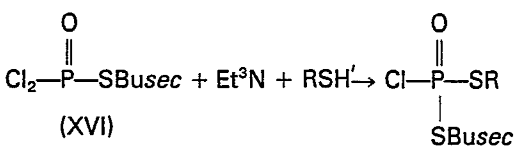

(XVI) (XVII)

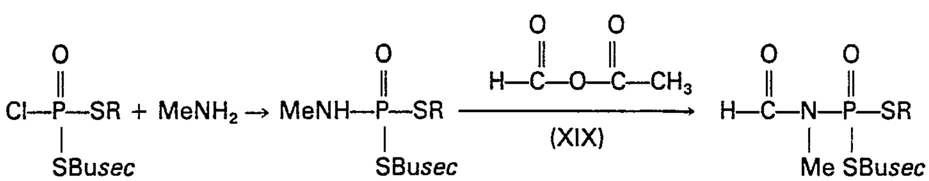

(XVII) (XVIII) (XIX) (XX)

In using the compounds of the invention, they may be applied to the soil, absorbed by plants grown in the soil, and ultimately ingested by the pests (notably insects, nematodes and acarids) by means of ingestion of the plant parts. This mode of application is referred to as "systemic" application. Alternatively, the active compound may be applied to the soil and contacted therein with the insects and other pests to be controlled. This means of application is referred to as "soil" application. In another alternative the active compound may be foliarly applied to the plants to be freed from insects and other pests.

When using the compounds defined above, the method of the invention is especially effective against soil insects when the active compound is applied on or in the soil in order to effect direct contact with the insects or other pests, including nematodes, acarids and fungi.

For use as pesticides, the compounds of this invention are usually used in the form of formulations. For example, they can be formulated with an agronomically acceptable carrier or diluent, as solutions in organic solvents, suspensions, wettable powders, emulsifiable concentrates, dusts, granules or flowable

emulsion concentrates. In such formulations, the compounds are usually present in a concentration of about 1 to about 95% by weight (eg 5%, 25%, 50% or 75%) and are mixed with the agronomically acceptable liquid or solid carrier or diluent. When desired, suitable surfactants are likewise incorporated. Surfactants commonly used in the art can be found in the John W. McCutcheon, Inc. publication "Detergents and Emulsifiers Annual."

By "agronomically acceptable carrier or diluent" is meant any substance which can be utilised to dissolve, disperse or diffuse the chemical incorporated therein without impairing the effectiveness of the pesticide and which does not create permanent damage to such environment as soil, equipment, and agronomic crops when utilized according to recommendations.

The compounds of this invention can be taken up on or mixed with a finely particled solid carrier, as for example, clays, inorganic silicates, carbonates, and silicas. Organic carriers can also be employed.

Dust concentrates are commonly made wherein compounds are present in the range of about 20 to 80% by weight. For ultimate applications, these concentrates are normally extended with additional solid to give an active ingredient content of from 1 to about 20% by weight. Granular formulations can be made using granular or pelletized form of carrier, such as granular clays, vermiculite, charcoal or maize cobs and usually contain the active ingredient an amount from about 0.1 to about 25% by weight, eg 1—25% and more usually 5—15%. Granules which typically have an average diameter of about 0.5 to 2 mm, or comparable sieve sizes, can be made by mixing the active ingredient with a finely divided inert solid, if necessary, with the addition of a binder and then forming the mixture into granules in a granulating device. Alternatively, preformed granules of an inert solid can be coated or impregnated with the active pesticidal ingredient.

Wettable powder formulations are made by incorporating the compounds of this invention in an inert, finely divided solid carrier along with a surfactant which can be one or more emulsifying, wetting, dispersing, or spreading agents or a blend of these. The compounds are usually present in the range of about 10 to about 80% by weight and surfactants in from about 0.5 to about 10% by weight. Commonly used emulsifying and wetting agents include polyoxyethylated derivatives of alkylphenols, fatty alcohols, fatty acids, alkylamines, alkylarene sulfonates and dialkyl sulfosuccinates. Spreading agents include such material as glycerol mannitan laurate and a condensate of polyglycerol and oleic acid modified with phthalic anhydride. Dispersing agents include such materials as the sodium salt of the copolymer of maleic anhydride and an olefin such as diisobutylene, sodium lignin sulfonate and sodium formaldehyde-naphthalene sulfonates.

One convenient method for preparing a solid formulation is to impregnate the compounds of this invention onto the solid carrier by means of a volatile solvent, such as acetone. In this manner, adjuvants, such as activators, adhesives, plant nutrients, synergists and various surfactants can also be incorporated.

Emulsifiable concentrate formulations are prepared by dissolving the compounds of this invention in an agronomically acceptable organic solvent and adding a solvent-soluble emulsifying agent. Suitable solvents are usually water-immiscible and can be found in the hydrocarbon, chlorinated hydrocarbon, ketone, ester, alcohol and amide classes of organic solvents. Mixtures of solvents are commonly employed. The surfactants useful as emulsifying agents can constitute about 0.5 to about 10% by weight of emulsifiable concentrates and can be anionic, cationic or non-ionic in character. The concentration of the active ingredients can vary from about 10 to about 80% by weight, preferably in the range of about 25 to about 50% by weight.

For use as pesticidal agents, these compounds should be applied in an effective amount sufficient to exert the desired pesticidal activity by techniques well known in the art. In certain situations, however, it may be desirable and advantageous to apply the compounds directly onto the loci to be protected or freed of pests without the benefit of any substantial amount of carrier. This is a particularly effective method when the physical nature of the toxicants is such as to permit what is known as "low-volume" application, that is, when the compounds are in liquid form or substantially soluble in higher boiling solvents.

The application rate will, of course, vary depending upon the purpose of such application, the compound being utilized, the frequency of dissemination, and the like.

Many of the above formulations can be utilized on animals for the control of parasites.

For use as arthropodicides, e.g. acaricides and insecticides, dilute sprays can be applied at concentrations of active ingredient of from about 4.5 g to about 9 kg per 378.5 litres (about 0.01 to about 20 pounds of the active ingredients per 100 U.S. gallons) of spray. They are usually applied at concentrations of about 45 g to 2.25 kg per 378.5 litres (about 0.1 to about 5 pounds per 100 U.S. gallons). In more concentrated sprays, the active ingredient is increased by a factor of 2 to 40. With dilute sprays, applications are usually made to the plants until run-off is achieved, whereas with more concentrated or low-volume sprays, the materials are applied as mists.

For use as a nematocide or as a soil insecticide, the compounds can be applied as a dilute liquid preparation or as a solid formulation, preferably a granular formulation, by broadcasting, side-dressing, introduction into the seed furrow, soil incorporation, or seed treatment. The application rate can be from about 1 to about 50 pounds per acre of active ingredient and for economic reasons, preferably from about 1 to about 25 pounds per acre.

For use as a fungicide, the compounds can be applied by methods commonly employed, such as conventional high-gallonage hydraulic sprays, low-gallonage sprays, air-blast sprays, aerial sprays and

dusts. The dilution and rate of application will depend upon the type of equipment employed, the method of application and diseases to be controlled, but the preferred effective amount is usually about 01/2 to about 56 kg/ha (0.1 to about 50 pounds per acre) of the active ingredient.

As a fungicidal seed protectant, the amount of toxicant coated on the seed is usually at a dosage rate of about 2.8 to 566 g (about 0.1 to about 20 ounces per hundred pounds) of seed. As a soil fungicide the chemical can be incorporated in the soil or applied to the surface usually at a dose of about 0.112 to about 56 kg/ha (about 0.1 to about 50 pounds per acre). As a foliar fungicide, the toxicant is usually applied to growing plants at a dose of 0.28 to 11 kg/ha (about 0.25 to about 10 lbs per acre).

The compounds of this invention can be utilized as the sole pesticidal agents or they can be employed in conjunction with other bactericides, fungicides, herbicides, insecticides, acaricides, and comparable pesticides.

The following examples are presented to illustrate the preparation of representative compounds of this invention. These compounds are identified in Table I appearing later. All parts and percentages are by weight unless otherwise indicated.

BASIC REACTION SCHEME A

A solution of N-ethyl N-hydrogencarbonyl O-ethyl S-(1-methylpropyl)phosphoroamidodithioate, 65 g (0.24 mol), and 2,4-bis-(4-methoxyphenyl)-2,4-dithioxo-1,3,2,4-dithiadiphosphetan, 60.7 g (0.15 mol) in 750 ml of 1,2-dimethoxyethane is stirred and heated at reflux temperature for about 2 hrs. The resulting clear yellow solution is cooled and the solvent is removed by distillation under reduced pressure. Hexane, 1l, is added to the residue and the resulting mixture is first stirred vigorously for 0.25 hr and then allowed to stand for 0.25 hr. The hexane layer is decanted off and the hexane is removed from this portion by distillation under reduced pressure to afford 42 g (61% of theory) of product as a yellow oil. The product is further purified by eluting a hexane solution of the product on a chromatographic column using Bio-Sil A (a silica gel chromatography support product available from Biorad Laboratories U.S.A.).

In the following Examples a phosphoroamidothioate precursor is substituted for a phosphoroamidodithioate precursor as used in Basic Reaction Scheme A.

Example 1

N-benzyl N-hydrogenthiocarbonyl O-ethyl S-(1-methylpropyl)phosphoroamidothioate

Example 2

N-allyl N-hydrogenthiocarbonyl O-ethyl S-(1-methylpropyl)phosphoroamidothioate

TABLE I

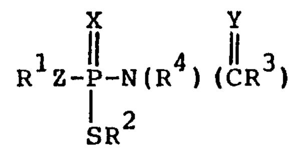

| Example | X | Y | Z | $R^1$ | $R^2$ | $R^3$ | $R^4$ |
|---|---|---|---|---|---|---|---|
| 1 | O | S | O | $C_2H_5$ | $s-C_4H_9$ | H | $CH_2C_6H_5$ |
| 2 | O | S | O | $C_2H_5$ | $s-C_4H_9$ | H | $CH_2CH=CH_2$ |
| 3 | O | S | O | $C_2H_5$ | $s-C_4H_9$ | H | $CH_2C=CH$ |
| 4 | O | S | O | $C_2H_5$ | $s-C_4H_9$ | H | $CH_2C_6H_4F-4$ |
| 5 | O | S | O | $C_2H_5$ | $s-C_4H_9$ | H | $CH_2C_6H_4OCH_3-3$ |
| 6 | O | S | O | $C_2H_5$ | $s-C_4H_9$ | H | $CH_2C_6H_4CF_3-3$ |
| 7 | O | S | O | $C_2H_5$ | $C_3H_7$ | H | $CH_2CH=CH_2$ |
| 8 | O | S | O | $C_2H_5$ | $C_3H_7$ | H | $CH_2C=CH$ |
| 9 | O | S | O | $C_2H_5$ | $s-C_4H_9$ | H | $CH_2C_6H_4Br-2$ |
| 10 | O | S | O | $C_2H_5$ | $s-C_4H_9$ | H | $CH_2C_6H_3ClF-2,6$ |
| 11 | O | S | O | $C_2H_5$ | $s-C_4H_9$ | H | $CH_2C_6H_3CH_3NO_2-3,4$ |
| 12 | O | S | O | $C_2H_5$ | $s-C_4H_9$ | H | $CH_2C_6F_5-2,3,4,5,6$ |
| 13 | O | S | O | $C_2H_5$ | $s-C_4H_9$ | H | $CH_2C_6H_3Cl_2-2,6$ |
| 14 | O | S | O | $C_2H_5$ | $n-C_3H_7$ | H | $CH_2C_6H_5$ |

Tables II and III which follow, respectively, set forth the analytical data and nuclear magnetic resonance (nmr) data of representative compounds selected from Table I. "NA" means not available.

TABLE II: Elemental Analysis

| Example | Emp. Formula | % Calcd. (Found) C | H | N |
|---|---|---|---|---|
| 1 | $C_8H_{18}NO_2PS_2$ | 37.62(36.06) | 7.10(7.09) | 5.48(5.58) |
| 2 | $C_6H_{14}NO_2PS_2$ | 31.70(31.14) | 6.21(6.95) | 6.16(6.35) |
| 3 | $C_{10}H_{18}NO_2PS_2$ | 42.99(40.58) | 6.49(6.86) | 5.01(4.81) |
| 4 | $C_{14}H_{21}FNO_2PS_2$ | 48.11(48.01) | 6.05(6.10) | 4.00(4.04) |
| 5 | $C_{15}H_{24}NO_3PS_2$ | 49.84(49.59) | 6.69(6.44) | 3.87(4.23) |
| 6 | $C_{15}H_{21}F_3NO_2PS_2$ | 45.10(45.18) | 5.30(5.48) | 3.50(3.44) |
| 7 | $C_9H_{18}NO_2PS_2$ | 40.4(37.86) | 6.78(6.91) | 5.23(6.13) |
| 8 | $C_9H_{16}NO_2PS_2$ | 40.73(40.49) | 6.07(6.32) | 5.27(5.35) |
| 9 | $C_{14}H_{21}BrNO_2PS_2$ | 40.97(41.43) | 5.15(5.12) | 3.41(3.42) |
| 10 | $C_{14}H_{20}ClFNO_2PS_2$ | 43.80(44.35) | 5.25(4.68) | 3.64(2.33) |
| 11 | $C_{15}H_{23}N_2O_5PS_2$ | 48.11(47.80) | 6.19(6.52) | 7.48(7.33) |
| 12 | $C_{14}H_{17}F_5NO_2PS_2$ | 39.90(40.14) | 4.06(4.16) | 3.32(3.60) |
| 13 | $C_{14}H_{20}Cl_2NO_2PS_2$ | 42.00(41.93) | 5.03(4.88) | 3.49(2.77) |
| 14 | NA | | | |

TABLE III - Nuclear Magnetic Resonance Data

Example 1: 9.30(d, 1H, C$\underline{H}$S); 7.10(m, 5H, aromatic); 5.00(m, 2H, NC$\underline{H}_2$); 4.00(m, 2H, OC$\underline{H}_2$); 3.38(m, 1H, SC$\underline{H}$); 1.78(m, 2H, SCHC$\underline{H}_2$); 1.50(t, 6H, $OCH_2C\underline{H}_3$ and SCHC$\underline{H}_3$); 1.00(m, 3H, $SCH(CH_3)CH_2C\underline{H}_3$)

Example 2: 9.38(d, 1H, C$\underline{H}$S); 6.10(m, 1H, $NCH_2C\underline{H}$=$CH_2$); 5.48(m, 2H, $NCH_2CH$=$C\underline{H}_2$); 4.78(m, 2H, SC$\underline{H}_2$); 4.40(m, 2H, OC$\underline{H}_2$); 3.40(m, 1H, SC$\underline{H}$); 1.80(m, 2H, SCHC$\underline{H}_2$); 1.40(m, 6H, $OCH_2C\underline{H}_3$ and SCHC$\underline{H}_3$); 1.00(m, 3H, $SCH(CH_3)CH_2C\underline{H}_3$)

Table IV which follows sets forth the biological data obtained as described below for the exemplary compounds described in Table I.

Initial evaluations are made on the following mite, insect, and nematode species:

| Code Symbol | Common Name | Latin Name |
|---|---|---|
| TSM | Two-spotted spider mite | *Tetranychus urticae* |
| GPA | Green peach aphid | *Myzus persicae* |
| CRW | Southern corn rootworm | *Diabrotica undecimpunctata howardi* |
| NEMA | Southern root-knot nematode | *Meloidogyne incognita* |

A test solution containing 600 ppm of test compound is prepared in an acetone:methanol:water system of 5:5:90 by volume. A test solution containing 150 ppm of test compound is prepared by diluting 1 part of the 600 ppm test solution with three parts of water. A 1:1 by weight mixture of alkylarlpolyether-alcohol (commercially available under the trademark TRITON X—155) and a modified phthalic glycerol alkyl resin (commercially available under the trademark TRITON B—1956) is utilized in the test solution in an amount of 28 g (one ounce) per 378.5 l (100 U.S. gallons) of test solution as a surfactant.

For the mite test, infested bean (*Phaseolus limeanus*) leaf sections (~2.5 × 2.5 cm) containing about 50 mites were placed in a Petri dish lid on a moistened piece of cotton. The leaves are then sprayed with the 600 ppm test solution using a rotating turntable. They are held for 24 hours and then the percent kill is determined.

For the aphid test, infected broccoli (*Brassica oleracea*) leaf section (~2.5 × 2.5 cm) containing about 30 adult and nymphal aphids are placed in a Petri dish lid on a moistened piece of cotton. The leaves are then sprayed with the 600 ppm test solution using a rotating turntable. They are held for 24 hours and then the percent kill is determined.

For the rootworm larvae test, ten milliliters of the 150 ppm test solution are added to 200 milliliter of soil in a 473 ml jar to give a concentration by volume of about 8 ppm. The jar is shaken to ensure thorough mixing, immediately uncapped, and allowed to air for 2 hours. Two presoaked kernels of Golden Cross Bantam corn (*Zea mays*) are placed in the bottom of a plastic cup and covered with about 30 grams of treated soil. The soil surface is inoculated with approximately 120 southern corn rootworm eggs and the plastic cup closed with a tight-fitting cap. The test cap is held for 10 days at 27°C and then the percent kill relative to the untreated check is determined.

For the nematode test, soil is homogeneously inoculated with nematode eggs at the rate of about 5000 eggs per 200 milliliters of soil extracted from a macerated blend of tomato roots heavily knotted with the root knot nematode. Ten milliliters of the 150 ppm test solution are added to 200 milliliters of the inoculated soil in a 473 ml jar to give a concentration by volume of about 8 ppm. The jar is shaken to ensure thorough mixing, immediately uncapped, and allowed to air for 24 hours. The soil is then placed into a 7.62 cm plastic pot after which time 3 cucumber (*Cucumis sativus*) seeds are planted. About 23 days thereafter, the cucumber plants are removed from the soil and root system examined for the presence of knots. A total of 25 knots or less is considered as a measure of control. Excellent control is characterized by 0—2 knots.

TABLE IV: Pesticidal Activity % Control[a]

| | Soil Application (150 ppm) | | Foliar Application (600 ppm) | |
|---|---|---|---|---|
| Example | CRW | NEMA | TSM | GPA |
| 1 | 100 | +++++ | 100 | 100 |
| 2 | 100 | +++ | 100 | 100 |
| 3 | 100 | +++++ | 100 | 100 |
| 4 | 100 | ++++ | 100 | 100 |
| 5 | 100 | ++++ | 100 | 100 |
| 6 | 100 | +++ | 100 | 100 |
| 7 | 100 | +++++ | 100 | 100 |
| 8 | 97 | - | 100 | 100 |
| 9 | 100 | +++ | 100 | 100 |
| 10 | 100 | +++++ | 100 | 100 |
| 11 | 98 | +++++ | 100 | 100 |
| 12 | 100 | +++ | 100 | 100 |
| 13 | 100 | - | 100 | 100 |
| 14 | 95 | +++ | 100 | 100 |

TABLE IV

Pesticidal Activity % Control[a] ctd.

| | |
|---|---|
| CRW = | Southern Corn Rootworm |
| NEMA = | Southern Root Knot Nematode |
| TSM = | Two Spotted Spider Mite |
| GPA = | Green Peach Aphid |
| NA = | Not Available |

[a] CRW, TSM, & GPA — Test results expressed as % control.
NEMA — Test results expressed as rankings for degree of knotting.

| Rank | Knots |
|---|---|
| +++++ | 0—2 |
| ++++ | 3—6 |
| +++ | 7—9 |
| ++ | 18—25 |
| — | 25+ |

**Claims**

1. A compound having the formula:

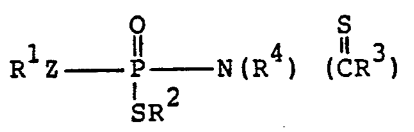 (I)

wherein:

$R^1$ is methyl, ethyl, 2,2,2-trifluoroethyl, phenyl or benzyl;
$R^2$ is $(C_3—C_5)$alkyl, phenyl or benzyl;
$R^3$ is hydrogen, methyl, or trifluoromethyl; and
$R^4$ is (a) propenyl or (b) benzyl, optionally substituted with from one to three of the same or different substituents selected from $(C_1—C_3)$alkyl, fluoro, chloro, bromo, methoxy, trifluoromethyl, nitro and cyano;
Z is O or S.

2. A compound as claimed in Claim 1, wherein
$R^1$ is methyl, ethyl, or 2,2,2-trifluoroethyl;
$R^2$ is *n*-propyl, 3-pentyl, or 1-methylpropyl;
$R^3$ is hydrogen;
$R^4$ is benzyl ring-substituted with one or two of the same or different substituents selected from $(C_1—C_3)$alkyl, fluoro, chloro, bromo, methoxy, trifluoromethyl, nitro and cyano; and
Z is O.

3. A method of combatting pests, (notably insects, nematodes and/or acarids) which comprises applying directly to the pests or to the *loci* to be freed or protected from attack by the pests, a pesticidally effective amount of one or more compounds as claimed in claim 1 or 2.

4. A pesticidal composition containing an active pesticidal component and a carrier or diluent therefor, wherein the active component comprises one or more compounds as claimed in any of Claims 1 to 9.

**Patentansprüche**

1. Verbindung der Formel

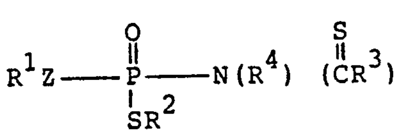 (I)

worin

$R^1$ Methyl, Ethyl, 2,2,2-Trifluorethyl, Phenyl oder Benzyl ist,

$R^2$ $(C_3—C_5)$Alkyl, Phenyl oder Benzyl ist,

$R^3$ Wasserstoff, Methyl oder Trifluormethyl ist und

$R^4$ (a) Propenyl oder (b) Benzyl, gegebenenfalls substituiert mit einem bis drei gleichen oder verschiedenen Substituenten, ausgewählt aus $(C_1—C_3)$Alkyl, Fluor, Chlor, Brom, Methoxy, Trifluormethyl, Nitro und Cyano, ist und

Z O oder S ist.

2. Verbindung nach Anspruch 1, worin

$R^1$ Methyl, Ethyl oder 2,2,2-Trifluorethyl ist,

$R^2$ n-Propyl, 3-Pentyl oder 1-Methylpropyl ist,

$R^3$ Wasserstoff ist,

$R^4$ ein Benzylring ist, substituiert mit einem oder zwei gleichen oder verschiedenen Substituenten, ausgewählt aus $(C_1—C_3)$Alkyl, Fluor, Chlor, Brom, Methoxy, Trifluormethyl, Nitro und Cyano, und

Z O ist.

3. Verfahren zur Bekämpfung von Schädlingen (insbesondere Insekten, Nematoden und/oder Acariden), welches darin besteht, direkt auf die Schädlinge oder auf die Stellen, die von den Schädlingen zu befreien oder gegenüber diesen zu schützen sind, eine pestizid wirksame Menge einer oder mehrer Verbindungen gemäß Anspruch 1 oder 2 aufzubringen.

4. Pestizides Mittel, enthaltend eine aktive pestizide Komponente und einen Träger oder Verdünnungsmittel dafür, wobei die aktive Komponente aus einer oder mehreren Verbindungen gemäß einem der Ansprüche 1 bis 9 besteht.

**Revendications**

1. Un composé de formule:

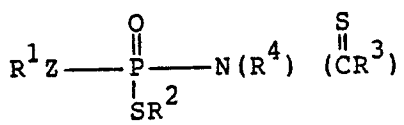

(I)

dans laquelle:

$R^1$ est un méthyle, un éthyle, un 2,2,2-trifluoroéthyle, un phényle ou un benzyle;

$R^2$ est un alcoyle en $C_3—C_5$, un phényle ou un benzyle;

$R^3$ est un hydrogène, un méthyle ou un trifluorométhyle; et

$R^4$ est (a) un propényle ou (b) un benzyle facultativement substitué par un à trois substituants semblables ou différents choisis parmi un alcoyle en $C_1—C_3$, un fluoro, un chloro, un bromo, un méthoxy, un trifluorométhyle, un nitro et un cyano;

Z est O ou S.

2. Un composé selon la revendication 1, où

$R^1$ est un méthyle, un éthyle ou un 2,2,2-trifluoroéthyle;

$R^2$ est un n-propyle, un 3-pentyle ou un 1-méthylpropyle;

$R^3$ est un hydrogène;

$R^4$ est un benzyle substitué sur le cycle par un ou deux substituants semblables ou différents choisis parmi un alcoyle en $C_1—C_3$, un fluoro, un chloro, un bromo, un méthoxy, un trifluorométhyle, un nitro et un cyano; et

Z est O.

3. Un procédé de lutte contre des nuisibles (notamment des insectes, des nématodes et/ou des acariens) qui comprend l'application, directement aux nuisibles ou aux sites à débarrasser ou à protéger de l'attaque par les nuisibles, d'une quantité pesticide efficace d'un ou plusieurs composés selon la revendication 1 ou 2.

4. Une composition pesticide contenant un composant pesticide actif et un véhicule ou diluant de celui-ci où le composant actif comprend un ou plusieurs composés selon l'une quelconque des revendications 1 ou 2.